# FASCICULE DE BREVET EUROPEEN

(11) **EP 3 521 569 B1**
(45) Date de publication et mention de la délivrance du brevet: **31.03.2021**
(21) Numéro de dépôt: 19154952.6
(22) Date de dépôt: 01.02.2019
(51) Int. Cl.: F01D 9/04

(54) **CARTER STRUCTURAL POUR TURBOMACHINE AXIALE**
STRUKTURGEHÄUSE FÜR AXIALE TURBOMASCHINE
STRUCTURAL CASING FOR AN AXIAL TURBINE ENGINE

(30) Priorité: 02.02.2018 BE 201805063
(43) Date de publication de la demande: 07.08.2019
(73) Titulaire: Safran Aero Boosters SA, 4041 Herstal (BE)
(72) Inventeur: BOVYN, Ludovic, 4500 Tihange (BE); ENGLEBERT, Eric, 4540 Amay (BE); PEETERS, Maxime, 4500 Ben-Ahin (BE)
(74) Mandataire: Lecomte & Partners

(56) Documents cités:
- EP-A1- 2 957 730
- EP-A2- 2 565 400
- US-A1- 2007 241 257

## Description

### Domaine technique

L'invention a trait à un ensemble pour turbomachine axiale. Plus précisément, l'invention a trait à un carter de turbomachine et en particulier un carter de compresseur.

### Technique antérieure

Un carter de compresseur de turbomachine axiale peut comprendre un tronçon structurel composé essentiellement d'un anneau externe, d'un moyeu central et de bras, dits « struts », s'étendant radialement entre le moyeu et l'anneau. Le carter structurel se présente généralement sous la forme d'une pièce monobloc obtenue par fonderie. En cas de défaut de fabrication, c'est l'ensemble de la pièce qui doit être mise au rebut, ce qui peut s'avérer très coûteux.

Le document WO 2004/083605 A1 décrit un stator de turbomachine. Le stator est composé d'une pluralité de secteurs angulaires identiques, assemblés et soudés. Chaque secteur angulaire comprend une portion d'anneau externe, une portion de moyeu central et deux demi-struts. Ce n'est qu'en assemblant deux secteurs angulaires adjacents que les struts prennent forme. Le bord d'attaque du strut est ainsi formé d'un cordon de soudure, qui n'a pas une géométrie parfaitement contrôlée. L'efficacité du stator n'est donc pas optimale. Aussi, cela nécessite un procédé de soudure complexe, avec un dépôt de matière ultérieur. Enfin, d'un point de vue logistique, des secteurs angulaires identiques seront plus à mêmes d'être réalisés par un et un seul fabricant ou sous-traitant, ce qui en termes d'approvisionnement n'est pas très flexible. Le document EP-2565400 divulgue par ailleurs un carter structural pour turbomachine axiale dans lequel l'anneau externe est formé par deux secteurs soudés entre eux à leur extrémité.

### Résumé de l'invention

### Problème technique

L'invention a pour objectif de résoudre au moins un des problèmes posés par l'art antérieur. Plus précisément, l'invention a pour objectif d'augmenter le rendement de la turbomachine, de simplifier l'assemblage du carter structurel et de proposer une conception qui se libère de certaines contraintes de fabrication en ne restreignant pas l'assemblage à des pièces parfaitement identiques.

### Solution technique

L'invention a trait à un carter structural pour turbomachine axiale, notamment pour turboréacteur d'aéronef, le carter comprenant : un anneau externe ; un moyeu central éventuellement monobloc ; et - une pluralité de bras radiaux s'étendant radialement du moyeu central à l'anneau externe, remarquable en ce que l'anneau externe est divisé angulairement en une pluralité de secteurs angulaires soudés angulairement deux à deux et éventuellement soudés radialement aux bras radiaux.

Les bras radiaux sont aussi parfois appelés « struts ». Le carter structural forme une structure portante du réacteur.

Selon l'invention, au moins deux des secteurs angulaires décrivent des angles différents, un des secteurs angulaires décrivant préférentiellement un angle au moins deux fois, trois fois ou quatre fois plus grand qu'un autre des secteurs angulaires.

Ainsi, vu depuis l'axe de l'anneau, les angles balayés, ou les angles selon lesquels chaque secteur s'étend, peuvent être différents.

Selon un mode avantageux de l'invention, le carter comprend au moins cinq secteurs angulaires, dont au moins trois grands secteurs angulaires décrivant un angle compris entre 80 et 100°, préférentiellement 90° et au moins deux petits secteurs angulaires décrivant un angle compris entre 30° et 60°, préférentiellement 45°. Alternativement, le carter peut comprendre au moins trois ou au moins quatre secteurs, dont un au moins décrit un angle strictement supérieur à 120° ou 90° respectivement.

Selon un mode avantageux de l'invention, au moins un des au moins trois grands secteurs angulaires est interposé entre deux des au moins deux petits secteurs angulaires.

Selon un mode avantageux de l'invention, le carter comprend des anneaux d'ancrage principaux destinés à être fixés à un pylône d'aéronef, les anneaux d'ancrage étant prévus sur les secteurs angulaires décrivant les angles les plus grands et/ou au moins le secteur angulaire qui décrit le plus petit des angles est dépourvu d'anneaux d'ancrage principaux.

Selon un mode avantageux de l'invention, au moins deux, préférentiellement trois des secteurs angulaires sont réalisés en des matériaux différents

Selon un mode avantageux de l'invention, chaque bras radial comprend une extrémité interne soudée au moyeu central, et une extrémité externe soudée à l'anneau externe.

Ces procédés de fabrication sont aisément identifiables sur l'anneau externe.

Selon un mode avantageux de l'invention, le carter comprend des brides de fixation venues de matière avec les secteurs angulaires. Ces brides peuvent être amont ou aval, et destinées à la fixation à un compresseur basse pression (amont) ou haute pression (aval). Outre une portion s'étendant radialement pour recevoir des éléments de fixation tels que des vis, les brides peuvent comporter une portion annulaire, éventuellement prévue avec des orifices de réception de tourillons d'aubes et/ou agrémentée de mécanisme d'actionnement d'orientation des aubes à calage variable.

Selon un mode avantageux de l'invention, le moyeu central est monobloc et/ou chaque bras radial est creux et monobloc, et/ou chaque bras radial est venu de matière avec un secteur angulaire.

Selon un mode avantageux de l'invention, le moyeu central est formé d'un assemblage de plusieurs portions angulaires, les surfaces de contact de deux portions angulaires adjacentes définissant des plans de joints du moyeu dont au moins un plan est angulairement décalé par rapport à chaque plan de joint de l'anneau externe défini par les soudures entre les secteurs angulaires.

Alternativement, les portions du moyeu peuvent correspondre aux secteurs de l'anneau en décrivant des angles similaires. Les plans de joints entre deux secteurs ou entre deux portions peuvent être coplanaires et alignés selon un rayon du carter. Alternativement, au moins un ou tous les plans de joints peuvent être distincts.

Selon un mode avantageux de l'invention, le moyeu présente une surface externe, préférablement sensiblement conique, sur laquelle sont aménagés des logements auxquels les bras sont soudés.

L'invention a également trait à un kit pour l'assemblage d'un carter structural selon l'un des modes de réalisation exposés ci-dessus, le kit comprenant plusieurs secteurs angulaires d'anneau externe, un moyeu central et des bras.

L'invention a également trait à une turbomachine axiale avec un compresseur basse-pression, un compresseur haute-pression et une veine intermédiaire entre le compresseur basse-pression et le compresseur haute-pression, remarquable en ce que la veine intermédiaire comprend un carter structural selon l'un des modes de réalisation exposés ci-dessus.

Selon un mode avantageux de l'invention, chaque bras radial est plus long axialement que haut radialement, éventuellement au moins deux fois.

L'invention a également pour objet un carter structural pour turbomachine axiale, notamment un carter support de soufflante pour turboréacteur d'aéronef, le carter comprenant : un anneau externe ; un moyeu central ; et une rangée annulaire de bras radiaux reliant radialement le moyeu central et l'anneau externe, remarquable en ce que l'anneau externe comprend des secteurs angulaires et des soudures angulaires reliant angulairement chaque secteur angulaire à ses secteurs angulaires voisins de manière à former une boucle autour du moyeu central.

Selon un mode avantageux de l'invention, le carter comprend des soudures radiales à chaque extrémité radiale de bras.

L'invention a également trait à une turbomachine axiale avec une turbine haute-pression, une turbine basse-pression et une veine intermédiaire entre la turbine haute-pression et la turbine basse-pression, remarquable en ce que la veine intermédiaire comprend un carter structural selon l'un des modes de réalisation exposés ci-dessus.

L'invention a également trait à un procédé d'assemblage d'un carter structural comprenant une étape d'assemblage par soudage de secteurs angulaires, remarquable en ce que les secteurs angulaires forment un anneau externe d'un carter selon l'un des modes de réalisation exposés ci-dessus.

Selon un mode avantageux de l'invention, le procédé comprend une étape d'assemblage du moyeu central à chacun des bras et une étape d'assemblage de chacun des bras à un secteur angulaire.

Selon un mode avantageux de l'invention, tous les bras sont assemblés au moyeu puis chacun des bras est assemblé à un secteur angulaire, les secteurs angulaires étant déjà assemblés entre eux avant que les bras n'y soient assemblés.

Selon un mode avantageux de l'invention, tous les bras sont assemblés au moyeu puis chacun des bras est assemblé à un secteur angulaire, puis les secteurs angulaires sont assemblés entre eux.

Selon un mode avantageux de l'invention, le moyeu central est formé de plusieurs portions angulaires et un ou plusieurs bras est/sont assemblé(s) à une portion angulaire du moyeu central d'une part et à un secteur angulaire de l'anneau externe d'autre part, puis les portions angulaires du moyeu et les secteurs angulaires de l'anneau externe sont assemblés entre eux.

Selon un mode avantageux de l'invention, au moins deux des secteurs angulaires sont fabriqués au moins en partie par deux procédés de fabrication différents, notamment fabrication additive ou fonderie.

Ainsi, certains des secteurs angulaires peuvent être fait d'un matériau donné, mis en forme selon un premier procédé, alors que certains autres secteurs sont mis en forme par un autre procédé.

Selon un mode avantageux de l'invention, le procédé comprend préalablement à l'étape d'assemblage de l'anneau externe, une étape de sélection, parmi un stock, d'au moins deux secteurs décrivant un angle différent, la somme des angles décrits par les secteurs sélectionnés étant de 360°.

### Avantages apportés

La présence de secteurs de dimensions différentes permet notamment d'optimiser la dimension des pièces en fonction du risque qu'elles se présentent en dehors des tolérances dimensionnelles. Ainsi, certains secteurs peuvent être réalisés par certains procédés connus pour être moins précis que d'autres. On réalisera donc des pièces plus petites pour avec certains procédés statistiquement moins souvent dans les tolérances dimensionnelles pour que les pertes soient limitées en cas de rebut. Il est également possible de confier à des sous-traitants différents la charge de la fabrication de certaines pièces et donc de confier aux fabricants les plus fiables des pièces de plus grandes dimensions. Tout ceci n'est pas possible si l'anneau externe est monobloc, ou si le carter comprend des modules comprenant chacun une partie de l'anneau externe et une partie du moyeu ou des bras.

### Brève description des dessins

La figure 1 représente une turbomachine axiale selon l'invention ;
La figure 2 est un schéma d'un compresseur de turbomachine ;
La figure 3 esquisse un kit selon l'invention ;
La figure 4 illustre une vue isométrique du carter selon l'invention ;
La figure 5 représente un schéma de l'anneau externe.

### Description des modes de réalisation

Dans la description qui va suivre, les termes intérieur et extérieur renvoient à un positionnement par rapport à l'axe de rotation d'une turbomachine axiale. La direction axiale est selon l'axe de rotation, et la direction radiale est perpendiculaire à la direction axiale. La direction latérale est entendue selon la circonférence, et peut être perpendiculaire à l'axe.

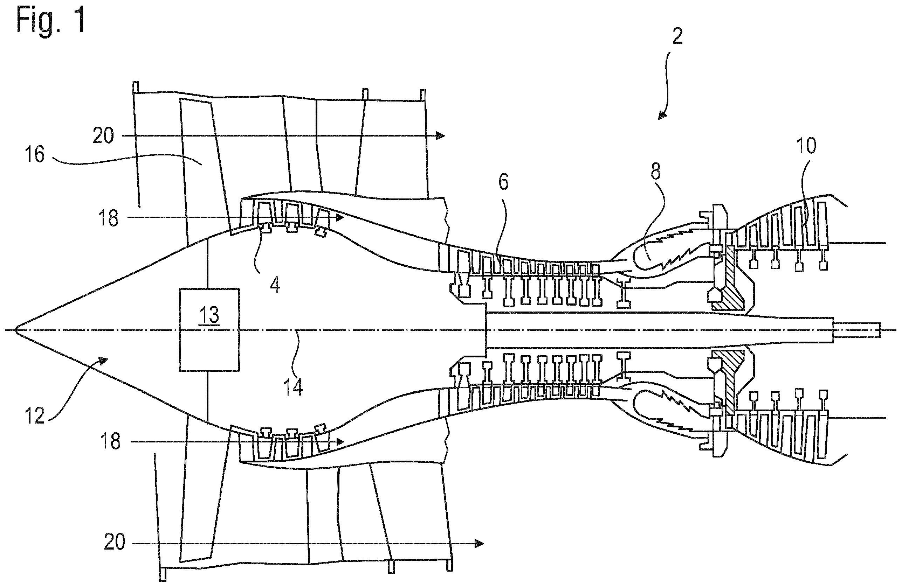

La figure 1 représente un turboréacteur double-flux 2. Le turboréacteur 2 comprend un compresseur basse-pression 4, un compresseur haute-pression 6, une chambre de combustion 8 et une turbine 10. En fonctionnement, la puissance mécanique de la turbine 10 transmise via l'arbre central jusqu'au rotor 12 met en mouvement les deux compresseurs 4 et 6.

Les compresseurs comportent plusieurs rangées d'aubes de rotor associées à des rangées d'aubes de stators. La rotation du rotor autour de son axe de rotation 14 permet ainsi de générer un débit d'air progressivement comprimé jusqu'à la chambre de combustion 8.

Un fan 16 est couplé au rotor 12 via un réducteur 13 et génère un flux d'air qui se divise en un flux primaire 18 et un flux secondaire 20. Les flux primaire 18 et secondaire 20 sont des flux annulaires, ils sont canalisés à l'aide de cloisons cylindriques, ou viroles, qui peuvent être intérieures et/ou extérieures.

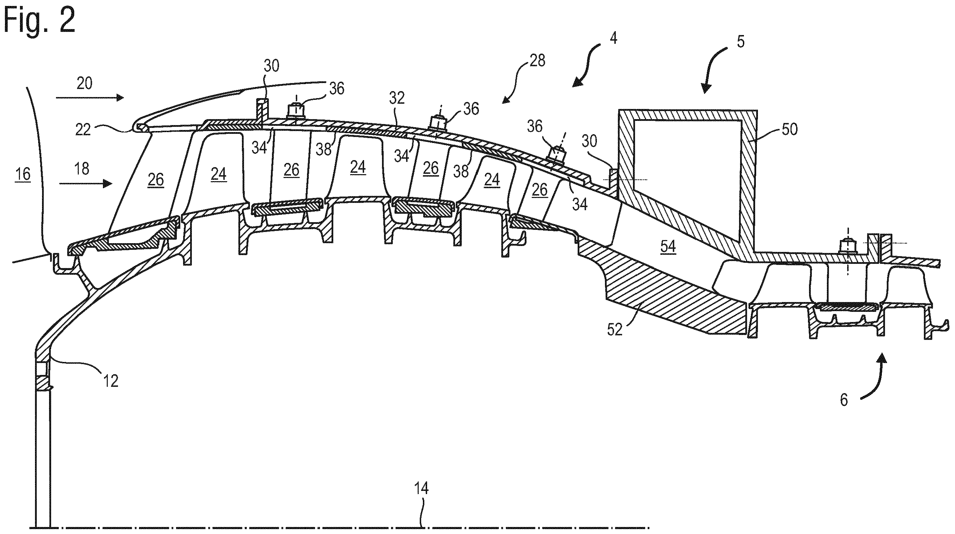

La figure 2 est une vue en coupe d'un compresseur d'une turbomachine axiale telle que celle de la figure 1. Le compresseur peut comprendre un compresseur basse-pression 4. On peut y observer une partie du fan 16 ainsi que le bec de séparation 22 des flux primaire 18 et secondaire 20. Le rotor 12 peut comprendre plusieurs rangées d'aubes rotoriques 24.

Le compresseur basse-pression 4 comprend au moins un redresseur qui contient une rangée annulaire d'aubes statoriques 26. Chaque redresseur est associé au fan 16 ou à une rangée d'aubes rotoriques 24 pour en redresser le flux d'air.

Le compresseur basse-pression 4 comprend au moins un carter 28. Le carter 28 peut présenter une forme généralement circulaire ou tubulaire. Il peut être un carter externe de compresseur et peut être en matériaux composites. Le carter 28 peut comprendre des brides de fixation 30, par exemple des brides annulaires de fixation 30 pour la fixation du bec de séparation 22 et/ou pour se fixer à un carter intermédiaire de soufflante de la turbomachine. Le carter assure alors une fonction de lien mécanique entre le bec de séparation 22 et le carter intercalaire 32. Le carter assure également une fonction de centrage du bec de séparation 22 par rapport au carter intermédiaire, par exemple à l'aide de ses brides annulaires. Les brides annulaires 30 peuvent être en composite et comprendre des orifices de fixation (non représentés) pour permettre une fixation par boulons.

La carter 28 peut comprendre une paroi 32 généralement circulaire ou en arc de cercle, dont les bords axiaux peuvent être délimités par les brides 30. La paroi 32 peut présenter un profil de révolution autour de l'axe de rotation 14. La paroi 32 peut être en matériau composite, avec une matrice et un renfort. La paroi 32 peut présenter une forme d'ogive, avec une variation de rayon le long de l'axe 14.

Les aubes statoriques 26 s'étendent essentiellement radialement depuis la paroi 32, au niveau de zones annulaires de réception d'aubes. Les aubes statoriques 26 comprennent chacune une plateforme 34 de fixation, et éventuellement des axes de fixation 36 tels des tiges filetées. La paroi peut comprendre des couches annulaires de matériau abradable 38 entre les plateformes 34 des aubes.

Grâce aux matériaux composites, le carter 28 peut mesurer entre 3 et 5 mm d'épaisseur pour un diamètre supérieur à 1 mètre.

En aval du compresseur basse-pression 4 se trouve un compresseur haute-pression 6. Le fonctionnement du compresseur haute-pression 6 est similaire au compresseur basse-pression 4.

Entre les deux compresseurs 4, 6 est prévue une structure porteuse ou carter structural 5. Ce carter 5 comprend un anneau externe 50, un moyeu central 52 et des bras radiaux 54. Les bras radiaux 54 s'étendent dans le flux d'air alors que l'anneau externe 50 et le moyeu central 52 présentent respectivement une surface externe et interne du flux.

Le carter 5 peut être muni d'une bride amont et/ou aval pour la connexion avec les compresseurs. Les aubes statoriques des compresseurs 4 et 6 peuvent être à orientation variable. La bride aval du carter 5 peut s'étendre en superposition axiale des aubes statoriques à orientation variable du compresseur 6 et porter ainsi l'actionnement et les paliers desdites aubes. Comme décrit sur la figure 2, une rangée annulaire d'aubes rotoriques du compresseur 6 peut éventuellement être intercalée axialement entre les bras radiaux et une telle rangée d'aubes statorique à orientation variable.

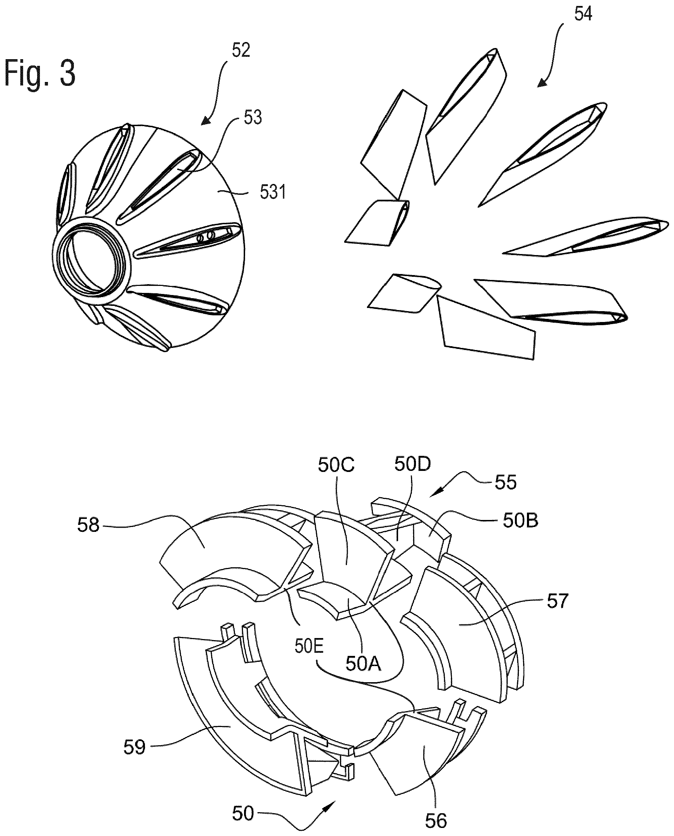

La figure 3 décrit plus en détail le carter structural 5. Dans ce mode de réalisation préféré, le moyeu central 52 est monobloc et présente une surface externe 531 sensiblement conique. Le diamètre du moyeu en amont (côté gauche de la pièce 52 sur la figure 2) est plus grand que le diamètre aval.

La surface externe 531 peut être courbe, voire avec un point d'inflexion, pour que la veine parcourue par le flux d'air dans le carter structural 5 ressemble à un « col de cygne ». La surface externe 531 peut aussi s'apparenter à un cône.

Le moyeu central 52 peut être pourvu de logements 53, sous forme d'un profilé en saillie de la surface externe 531. Ces profilés permettent d'accueillir les bras 54 destinés à être soudés à la surface externe 531 du moyeu 52.

Les bras 54 sont préférablement régulièrement distribués angulairement autour du moyeu central 52.

L'anneau externe 50 est composé de plusieurs secteurs angulaires, préférentiellement cinq secteurs notés 55 à 59. Chaque secteur peut être monobloc, et notamment venu de matière.

Chaque secteur (55-59) peut comprendre une portion axiale 50A destinée à délimiter le flux primaire de la turbomachine. Chaque portion axiale 50A peut essentiellement s'étendre axialement et circonférentiellement. Chaque portion axiale 50A peut former un arc angulaire de paroi tubulaire autour de l'axe de rotation de la turbomachine, ou du moins autour de l'axe de symétrie du carter.

Chaque secteur (55-59) peut comprendre au moins une cloison radiale, éventuellement deux cloisons radiales. Par exemple, les cloisons radiales peuvent comprendre une cloison amont 50B et une cloison aval 50C. Chaque portion radiale (50B ; 50C) peut essentiellement s'étendre radialement et circonférentiellement. Au moins une ou chaque cloison radiale (50B ; 50C) peut s'étendre radialement depuis la cloison axiale 50C du secteur correspondant.

Chaque secteur peut comprendre un prolongement radial 50D. Chaque prolongement radial 50D peut prolonger radialement un bras radial. Chaque prolongement radial 50D peut s'étendre radialement depuis une portion axiale 50A, et/ou relier axialement les cloisons radiales (50B ; 50C).

Chaque secteur comprend deux surfaces de contact 50E destinées à venir au contact de surfaces de contact respectives des secteurs adjacents.

Les différentes pièces du carter sont assemblées par soudage, par exemples laser ou electron-beam-welding.

Chacune des pièces peut être faite d'un matériau différent et l'homme du métier saurait adapter le type de technologie de soudage en fonction des matériaux en présence.

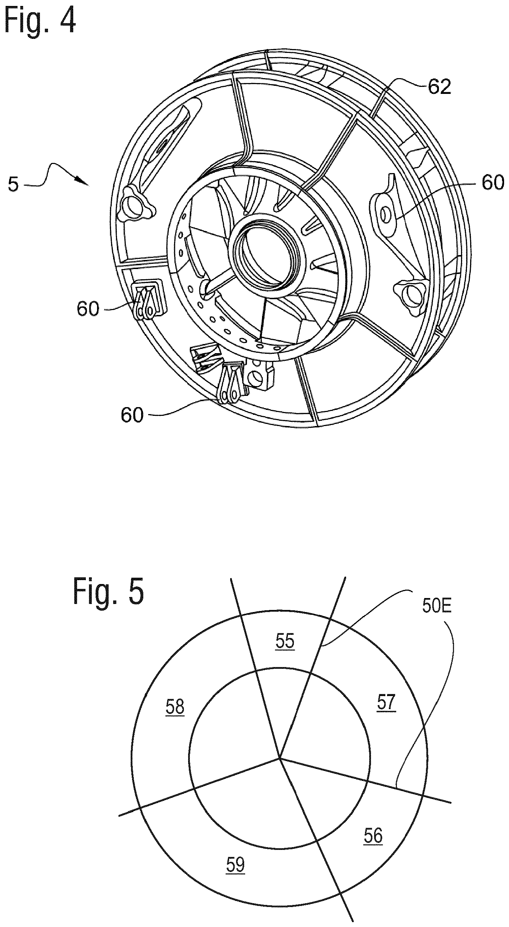

La figure 4 représente une vue isométrique du carter 5, une fois toutes les pièces le composant assemblées, vu depuis l'aval.

Certains des secteurs angulaires, notamment les plus grands, comprennent des anneaux d'ancrage 60 permettant la manipulation du carter ou des pièces qui y sont attachées, lors de l'assemblage de la turbomachine, ou lors d'une opération de maintenance. Ces anneaux d'ancrage 60 peuvent aussi servir de fixation sur un pylône d'aéronef (non représenté). Les anneaux d'ancrage 60 peuvent comprendre des anneaux principaux, et éventuellement des anneaux auxiliaires. Les anneaux principaux peuvent être disposés en moitié supérieure du carter 5. Les anneaux principaux peuvent être formés au travers de brides de fixation principales.

Les anneaux d'ancrage principaux peuvent être séparés par au moins une, éventuellement par au moins deux soudures inter-secteur 62. Chaque soudure inter-secteur 62 peut être disposée entre deux bras successifs.

La figure 5 montre un exemple des différents angles que peuvent décrire les secteurs angulaires. Les secteurs sont arbitrairement numérotés dans l'ordre croissant de l'angle qu'ils décrivent. Ainsi, le plus petit secteur 55 décrit un angle d'environ 40°. Le secteur 56 décrit un angle de 45°. Les secteurs 57, 58 et 59 décrivent respectivement des angles de 90°, 90° et 95°.

Selon un mode de réalisation de l'invention qui n'est pas illustré, le moyeu central 52 peut aussi être un assemblage de portions angulaires, de géométries (angles de chaque portion) similaires aux ou différentes des secteurs angulaires de l'anneau externe.

Selon un mode de réalisation de l'invention qui n'est pas illustré, le carter structural 5 est un carter intermédiaire entre une turbine haute-pression et d'une turbine basse-pression. Un carter de conception sensiblement similaire, avec les bras radiaux orientés aérodynamiquement à l'opposé de ce qui est décrit sur la figure 3, peut être utilisé.

Les différents détails des différents modes de réalisation exposés dans la présente demande peuvent être combinés à moins qu'ils ne soient explicitement décrits comme alternatives et qu'une telle combinaison soit rendue mécaniquement impossible.

## Revendications

1. Carter structural (5) pour turbomachine axiale (2), notamment pour turboréacteur d'aéronef, le carter (5) comprenant :
- un anneau externe (50) ;
- un moyeu central (52) ; et
- une pluralité de bras radiaux (54) s'étendant radialement du moyeu central (52) à l'anneau externe (50),
l'anneau externe (50) étant divisé angulairement en une pluralité de secteurs angulaires (55, 56, 57, 58, 59) soudés deux à deux, et soudés aux bras radiaux (54), **caractérisé en ce qu'**au moins deux des secteurs angulaires (55, 56, 57, 58, 59) décrivent des angles différents, un des secteurs angulaires (57, 58, 59) décrivant préférentiellement un angle au moins deux fois, trois fois ou quatre fois plus grand qu'un autre des secteurs angulaires (55, 56).

2. Carter selon la revendication 1, **caractérisé en ce qu'**il comprend :
- au moins trois secteurs angulaires (55, 56, 57, 58, 59), dont au moins un décrit un angle supérieur à 120° ; ou
- au moins quatre secteurs angulaires (55, 56, 57, 58, 59), dont au moins un décrit un angle supérieur à 90° ; ou
- au moins cinq secteurs angulaires (55, 56, 57, 58, 59), dont au moins trois grands secteurs angulaires (57, 58, 59) décrivant un angle compris entre 80 et 100°, préférentiellement 90° et au moins deux petits secteurs angulaires (55, 56) décrivant un angle compris entre 30° et 60°, préférentiellement 45°.

3. Carter selon la revendication 2, **caractérisé en ce qu'**au moins un des au moins trois grands secteurs angulaires (57, 58, 59) est interposé entre deux des au moins deux petits secteurs angulaires (55, 56).

4. Carter selon l'une des revendications 1 à 3, **caractérisé en ce qu'**il comprend des anneaux d'ancrage (60) principaux destinés à être fixés à un pylône d'aéronef, les anneaux d'ancrage (60) étant prévus sur les secteurs angulaires (57, 58, 59) décrivant les angles les plus grands et/ou au moins le secteur angulaire (55) qui décrit le plus petit des angles est dépourvu d'anneaux d'ancrage (60) principaux.

5. Carter selon l'une des revendications 1 à 4, **caractérisé en ce qu'**au moins deux, préférentiellement trois des secteurs angulaires (55, 56, 57, 58, 59) sont réalisés en des matériaux différents.

6. Carter selon l'une des revendications 1 à 5, **caractérisé en ce que** chaque bras radial (54) comprend une extrémité interne soudée au moyeu central (52), et éventuellement une extrémité externe soudée à l'anneau externe (50).

7. Carter selon l'une des revendications 1 à 6, **caractérisé en ce qu'**il comprend des brides de fixation venues de matière avec les secteurs angulaires.

8. Carter selon l'une des revendications 1 à 7, **caractérisé en ce que** le moyeu central (52) est monobloc et/ou chaque bras radial (54) est creux et monobloc.

9. Carter selon l'une des revendications 1 à 8, **caractérisé en ce que** le moyeu central (52) est formé d'un assemblage de plusieurs portions angulaires, les surfaces de contact de deux portions angulaires adjacentes définissant des plans de joints du moyeu dont au moins un plan est angulairement décalé par rapport à chaque plan de joint de l'anneau externe défini par les soudures entre les secteurs angulaires.

10. Carter selon l'une des revendications 1 à 9, **caractérisé en ce que** le moyeu (52) présente une surface externe (531), préférablement sensiblement conique, sur laquelle sont aménagés des logements (53) auxquels les bras (54) sont soudés.

11. Kit pour l'assemblage d'un carter structural, **caractérisé en ce que** le kit est apte à l'assemblage d'un carter selon l'une des revendications 1 à 10, le kit comprenant plusieurs secteurs angulaires d'anneau externe (55, 56, 57, 58, 59), un moyeu central (52) et des bras (54) solidaires des secteurs angulaires d'anneau externe ou séparés des secteurs angulaires d'anneau externe.

12. Procédé d'assemblage d'un carter structural comprenant une étape d'assemblage par soudage de secteurs angulaires (55, 56, 57, 58, 59), **caractérisé en ce que** les secteurs angulaires (55, 56, 57, 58, 59) forment un anneau externe (50) d'un carter (5) selon l'une des revendications 1 à 10.

13. Procédé d'assemblage selon la revendication 12, **caractérisé en ce qu'**il comprend une étape d'assemblage du moyeu central (52) à chacun des bras (54) et notamment une étape d'assemblage de chacun des bras (54) à un secteur angulaire (55, 56, 57, 58, 59), et tous les bras (54) sont assemblés au moyeu (52) puis chacun des bras (54) est assemblé à un secteur angulaire (55, 56, 57, 58, 59), les secteurs angulaires (55, 56, 57, 58, 59) étant déjà assemblés entre eux avant que les bras (54) n'y soient assemblés..

14. Procédé d'assemblage selon la revendication 12, **caractérisé en ce qu'**il comprend une étape d'assemblage du moyeu central (52) à chacun des bras (54) et notamment une étape d'assemblage de chacun des bras (54) à un secteur angulaire (55, 56, 57, 58, 59), et **caractérisé en ce que** tous les bras (54) sont assemblés au moyeu (52) puis chacun des bras (54) est assemblé à un secteur angulaire (55, 56, 57, 58, 59), puis les secteurs angulaires (55, 56, 57, 58, 59) sont assemblés entre eux, le moyeu central étant préférentiellement formé de plusieurs portions angulaires et un ou plusieurs bras est/sont assemblé(s) à une portion angulaire du moyeu central d'une part et à un secteur angulaire de l'anneau externe d'autre part, puis les portions angulaires du moyeu et les secteurs angulaires de l'anneau externe sont assemblés entre eux.

15. Procédé selon l'une des revendications 12 à 14, **caractérisé en ce qu'**au moins deux des secteurs angulaires (55, 56, 57, 58, 59) sont fabriqués au moins en partie par deux procédés de fabrication différents, notamment fabrication additive ou fonderie.

## Patentansprüche

1. Strukturgehäuse (5) für eine axiale Turbomaschine (2), insbesondere für ein Flugzeug-Turboluftstrahltriebwerk, wobei das Gehäuse (5) Folgendes umfasst
- einem Außenring (50);
- ein zentrales Drehkreuz (52); und
- eine Mehrzahl von radialen Armen (54), die sich radial von der zentralen Nabe (52) zum Außenring (50) erstrecken,
wobei der Außenring (50) winkelmäßig in eine Vielzahl von Winkelsektoren (55, 56, 57, 58, 59) unterteilt ist, die paarweise zusammengeschweißt und mit den radialen Armen (54) verschweißt sind, **dadurch gekennzeichnet, dass** mindestens zwei der Winkelsektoren (55, 56, 57, 58, 59) unterschiedliche Winkel beschreiben, wobei einer der Winkelsektoren (57, 58, 59) vorzugsweise einen Winkel beschreibt, der mindestens zweimal, dreimal oder viermal größer ist als ein anderer der Winkelsektoren (55, 56).

2. Gehäuse nach Anspruch 1, **dadurch gekennzeichnet, dass** er Folgendes umfasst:
- mindestens drei Winkelsektoren (55, 56, 57, 58, 59), von denen mindestens einer einen Winkel von mehr als 120° beschreibt; oder
- mindestens vier Winkelsektoren (55, 56, 57, 58, 59), von denen mindestens einer einen Winkel größer als 90° beschreibt; oder
- mindestens fünf Winkelsektoren (55, 56, 57, 58, 59), von denen mindestens drei große Winkelsektoren (57, 58, 59) einen Winkel zwischen 80° und 100°, vorzugsweise 90°, beschreiben und mindestens zwei kleine Winkelsektoren (55, 56) einen Winkel zwischen 30° und 60°, vorzugsweise 45°, beschreiben.

3. Gehäuse nach Anspruch 2, **dadurch gekennzeichnet, dass** mindestens einer von mindestens drei großen Winkelsektoren (57, 58, 59) zwischen zwei von mindestens zwei kleinen Winkelsektoren (55, 56) angeordnet ist.

4. Gehäuse nach einem der Ansprüche 1 bis 3, **dadurch gekennzeichnet, dass** es Hauptverankerungsringe (60) zur Befestigung an einem Flugzeugmast umfasst, wobei die Verankerungsringe (60) an den Winkelsektoren (57, 58, 59) vorgesehen sind, die die größten Winkel beschreiben, und/oder zumindest der Winkelsektor (55), der den kleinsten der Winkel beschreibt, frei von Hauptverankerungsringen (60) ist.

5. Gehäuse nach einem der Ansprüche 1 bis 4, **dadurch gekennzeichnet, dass** mindestens zwei, vorzugsweise drei der Winkelsektoren (55, 56, 57, 58, 59) aus unterschiedlichen Materialien gefertigt sind.

6. Gehäuse nach einem der Ansprüche 1 bis 5, **dadurch gekennzeichnet, dass** jeder Radialarm (54) ein an die zentrale Nabe (52) geschweißtes inneres Ende und wahlweise ein an den Außenring (50) geschweißtes äußeres Ende aufweist.

7. Gehäuse nach einem der Ansprüche 1 bis 6, **dadurch gekennzeichnet, dass** es einstückig geformte Befestigungsflansche mit den Winkelsektoren aufweist.

8. Gehäuse nach einem der Ansprüche 1 bis 7, **dadurch gekennzeichnet, dass** die zentrale Nabe (52) einstückig ist und/oder jeder radiale Arm (54) hohl und einstückig ist.

9. Gehäuse nach einem der Ansprüche 1 bis 8, **dadurch gekennzeichnet, dass** die zentrale Nabe (52) durch eine Anordnung mehrerer Winkelabschnitte gebildet ist, wobei die Kontaktflächen zweier benachbarter Winkelabschnitte Verbindungsebenen der Nabe definieren, von denen mindestens eine Ebene winkelmäßig gegenüber jeder Verbindungsebene des Außenrings, die durch die Schweißnähte zwischen den Winkelsektoren definiert ist, versetzt ist.

10. Gehäuse nach einem der Ansprüche 1 bis 9, **dadurch gekennzeichnet, dass** die Nabe (52) vorzugsweise eine im Wesentlichen konische Außenfläche (531) aufweist, an der Gehäuse (53) vorgesehen sind, an die die Arme (54) angeschweißt sind.

11. Bausatz für den Zusammenbau eines strukturellen Gehäuses, **dadurch gekennzeichnet, dass** der Bausatz für den Zusammenbau eines Gehäuses nach einem der Ansprüche 1 bis 10 geeignet ist, wobei der Bausatz mehrere Winkelsektoren (55, 56, 57, 58, 59) des Außenrings, eine zentrale Nabe (52) und Arme (54) umfasst, die mit den Winkelsektoren des Außenrings einstückig ausgebildet oder von den Winkelsektoren des Außenrings getrennt sind.

12. Verfahren zum Zusammenbau eines strukturellen Gehäuses, das einen Schritt des Zusammenbaus durch Schweißen von Winkelsektoren (55, 56, 57, 58, 59) umfasst, **dadurch gekennzeichnet, dass** die Winkelsektoren (55, 56, 57, 58, 59) einen Außenring (50) eines Gehäuses (5) nach einem der Ansprüche 1 bis 10 bilden.

13. Verfahren nach Anspruch 12, **dadurch gekennzeichnet, dass** es einen Schritt des Zusammenbaus der zentralen Nabe (52) mit jedem der Arme (54) und insbesondere einen Schritt des Zusammenbaus jedes der Arme (54) mit einem Winkelsektor (55, 56, 57, 58, 59) umfasst, und alle Arme (54) mit der Nabe (52) verbunden sind und dann jeder der Arme (54) mit einem Winkelsektor (55, 56, 57, 58, 59) verbunden wird, wobei die Winkelsektoren (55, 56, 57, 58, 59) bereits miteinander verbunden sind, bevor die Arme (54) damit verbunden werden.

14. Verfahren nach Anspruch 12, **dadurch gekennzeichnet, dass** es einen Schritt des Zusammenfügens der zentralen Nabe (52) mit jedem der Arme (54) und insbesondere einen Schritt des Zusammenfügens jedes der Arme (54) mit einem Winkelsektor (55, 56, 57, 58, 59) umfasst, und **dadurch gekennzeichnet, dass** alle Arme (54) mit der Nabe (52) zusammengefügt werden und dann jeder der Arme (54) mit einem Winkelsektor (55, 56, 57, 58, 59) zusammengefügt wird, dann die Winkelsektoren (55, 56, 57, 58, 59) miteinander verbunden werden, wobei die Zentralnabe vorzugsweise aus mehreren Winkelabschnitten gebildet wird und ein oder mehrere Arme einerseits mit einem Winkelabschnitt der Zentralnabe und andererseits mit einem Winkelsektor des Außenrings verbunden wird/werden, dann die Winkelabschnitte der Nabe und die Winkelsektoren des Außenrings miteinander verbunden werden.

15. Verfahren nach einem der Ansprüche 12 bis 14, **dadurch gekennzeichnet, dass** mindestens zwei der Winkelsektoren (55, 56, 57, 58, 59) zumindest teilweise durch zwei verschiedene Herstellungsverfahren, insbesondere Additivherstellung oder Gießen, hergestellt werden.

## Claims

1. Structural casing (5) for an axial turbomachine (2), in particular for an aircraft turbojet engine, the casing (5) comprising:
- an outer ring (50);
- a central hub (52); and
- a plurality of radial arms (54) extending radially from the central hub (52) to the outer ring (50),
the outer ring (50) being angularly divided into a plurality of angular sectors (55, 56, 57, 58, 59) welded together in pairs and welded to the radial arms (54), **characterised in that** at least two of the angular sectors (55, 56, 57, 58, 59) describe different angles, one of the angular sectors (57, 58, 59) preferably describing an angle at least twice, three times or four times greater than another of the angular sectors (55, 56).

2. Casing according to claim 1, **characterised in that** it comprises:
- at least three angular sectors (55, 56, 57, 58, 59), at least one of which describes an angle greater than 120°; or
- at least four angular sectors (55, 56, 57, 58, 59), at least one of which describes an angle greater than 90°; or
- at least five angular sectors (55, 56, 57, 58, 59), of which at least three large angular sectors (57, 58, 59) describe an angle between 80° and 100°, preferably 90°, and at least two small angular sectors (55, 56) describe an angle between 30° and 60°, preferably 45°.

3. Casing according to claim 2, **characterised in that** at least one of at least three large angular sectors (57, 58, 59) is interposed between two of at least two small angular sectors (55, 56).

4. Casing according to any one of claims 1 to 3, **characterised in that** it comprises main anchor rings (60) for attachment to an aircraft pylon, the anchor rings (60) being provided on the angular sectors (57, 58, 59) describing the largest angles and/or at least the angular sector (55) which describes the smallest of the angles being free of main anchor rings (60).

5. Casing according to any one of claims 1 to 4, **characterised in that** at least two, preferably three of the angular sectors (55, 56, 57, 58, 59) are made of different materials.

6. Casing according to any one of claims 1 to 5, **characterised in that** each radial arm (54) comprises an inner end welded to the central hub (52), and optionally an outer end welded to the outer ring (50).

7. Casing according to any one of claims 1 to 6, **characterised in that** it comprises fixing flanges integrally formed with the angular sectors.

8. Casing according to any one of claims 1 to 7, **characterised in that** the central hub (52) is integral and/or each radial arm (54) is hollow and integral.

9. Casing according to any one of claims 1 to 8, **characterised in that** the central hub (52) is formed by an assembly of a plurality of angular portions, the contact surfaces of two adjacent angular portions defining joint planes of the hub, at least one plane of which is angularly offset with respect to each joint plane of the outer ring defined by the welds between the angular sectors.

10. Casing according to any one of claims 1 to 9, **characterised in that** the hub (52) has a preferably substantially conical outer surface (531) on which housings (53) are provided to which the arms (54) are welded.

11. Kit for assembling a structural casing, **characterised in that** the kit is suitable for assembling a casing according to any one of claims 1 to 10, the kit comprising a plurality of outer ring angular sectors (55, 56, 57, 58, 59), a central hub (52) and arms (54) integral with the outer ring angular sectors or separate from the outer ring angular sectors.

12. Method for assembling a structural casing comprising a step of assembling by welding angular sectors (55, 56, 57, 58, 59), **characterised in that** the angular sectors (55, 56, 57, 58, 59) form an outer ring (50) of a casing (5) according to any one of claims 1 to 10.

13. Method according to claim 12, **characterised in that** it comprises a step of assembling the central hub (52) to each of the arms (54) and in particular a step of assembling each of the arms (54) to an angular sector (55, 56, 57, 58, 59), and all the arms (54) are assembled to the hub (52) and then each of the arms (54) is assembled to an angular sector (55, 56, 57, 58, 59), the angular sectors (55, 56, 57, 58, 59) being already assembled to each other before the arms (54) are assembled thereto.

14. Method according to claim 12, **characterised in that** it comprises a step of assembling the central hub (52) to each of the arms (54) and in particular a step of assembling each of the arms (54) to an angular sector (55, 56, 57, 58, 59), and **characterised in that** all the arms (54) are assembled to the hub (52) and then each of the arms (54) is assembled to an angular sector (55, 56, 57, 58, 59), then the angular sectors (55, 56, 57, 58, 59) are assembled to each other, the central hub preferably being formed of a plurality of angular portions and one or a plurality of arms is/are assembled to an angular portion of the central hub on the one hand and to an angular sector of the outer ring on the other hand, then the angular portions of the hub and the angular sectors of the outer ring are assembled to each other.

15. Method according to any one of claims 12 to 14, **characterised in that** at least two of the angular sectors (55, 56, 57, 58, 59) are manufactured at least partially by two different manufacturing processes, in particular by additive manufacturing or casting.
